# EUROPÄISCHE PATENTSCHRIFT

(11) **EP 3 080 539 B1**
(45) Veröffentlichungstag und Bekanntmachung des Hinweises auf die Patenterteilung: **15.05.2019**
(21) Anmeldenummer: 14795586.8
(22) Anmeldetag: 28.10.2014
(51) Int. Cl.: F28D 7/16, F28F 9/02, F28F 9/18, F28F 21/06, F28F 21/08, F02M 26/32, F02M 26/11, F28D 21/00

(54) **WÄRMETAUSCHER MIT GEHÄUSE AUS KUNSTSTOFF UND SCHUTZ VOR THERMISCHER BELASTUNG**
HEAT EXCHANGER WITH PLASTIC CASING AND THERMAL PROTECTION
ÉCHANGEUR DE CHALEUR À BOÎTIER EN PLASTIQUE AVEC PROTECTION THERMIQUE

(30) Priorität: 29.10.2013 DE 102013221932
(43) Veröffentlichungstag der Anmeldung: 19.10.2016
(73) Patentinhaber: Mahle International GmbH, 70376 Stuttgart (DE)
(72) Erfinder: EMRICH, Karsten, 70599 Stuttgart (DE); SCHÜLE, Matthias, 71732 Tamm (DE); KRÄMER, Bernd, 71701 Schwieberdingen (DE); SIEGEL, Albrecht, 71642 Ludwigsburg (DE); SCHMIDGALL, Gaelle, 70378 Stuttgart (DE)
(74) Vertreter: Grauel, Andreas
(86) Internationale Anmeldenummer: PCT/EP2014/073157
(87) Internationale Veröffentlichungsnummer: WO 2015/063111

(56) Entgegenhaltungen:
- EP-A1- 2 110 538
- EP-A1- 2 765 286
- DE-A1-102007 031 419
- DE-A1-102009 016 317
- DE-A1-102009 025 282
- DE-A1-102013 008 773
- DE-T2- 60 004 919
- FR-A1- 2 931 900

## Beschreibung

### Technisches Gebiet

Die Erfindung betrifft einen Wärmetauscher, insbesondere für ein Kraftfahrzeug nach dem Oberbegriff von Anspruch 1 und ein Kraftfahrzeug mit einem Wärmetauscher.

### Stand der Technik

In einem Wärmetauscher, der auch als Wärmeübertrager bezeichnet wird, kann thermische Energie von einem Stoffstrom auf einen anderen übertragen werden. In einem Kraftfahrzeug werden unterschiedliche Ausführungsformen von Wärmetauschern verwendet, insbesondere I-Flow-Wärmetauscher und U-Flow-Wärmetauscher. Die Wärmetauscher sollten möglichst leicht sein, um insgesamt Gewicht im Kraftfahrzeug einzusparen. Bevorzugt sind die Wärmetauscher zumindest teilweise oder bereichsweise aus einem leichten Material, insbesondere einem Kunststoff gefertigt. Derzeit sind lediglich U-Flow-Wärmetauscher mit einem Kunststoffgehäuse auf dem Markt und im Kraftfahrzeug im Einsatz. Die I-Flow-Wärmetauscher werden aus Fertigungsgründen derzeit aus metallischen Materialien, insbesondere Stahl oder auch Aluminiumguss gefertigt.

Aus der DE 10 2009 050 884 A1 ist ein Abgaswärmetauscher, insbesondere für ein Kraftfahrzeug bekannt, der mindestens einen Diffusor zum Zuführen und/oder Abführen eines Abgasstromes, einen Tauschbereich mit sich in axialer Richtung erstreckenden Tauscherrohren aufweist, wobei die Tauscherrohre an einem Ende mit einem Boden verbunden sind. Ferner weist der Abgaswärmetauscher ein von einem Kühlmittel durchströmbares Gehäuse auf, das aus einem nicht hochtemperaturfesten Material, insbesondere Kunststoff oder Aluminium, gebildet ist, wobei ein Verbindungselement teilweise in das Gehäuse eingebettet ist, um das Verbindungselement an dem Gehäuse zu befestigen. Das Verbindungselement ist in einem ersten Stoffschlussbereich stoffschlüssig mit dem Boden verbunden, der an einem zweiten Stoffschlussbereich stoffschlüssig mit dem Diffusor verbunden ist.

Aus der DE 10 2009 016 317 A1 ist ein Wärmetauscher entsprechend dem Oberbegriff des Anspruchs 1, nämlich ein Ladeluftkühler für ein Kraftfahrzeug bekannt, dessen als Saugrohr ausgebildetes Gehäuse aus Kunststoff gefertigt und zum Schutz vor thermischen Belastungen innen mit einer Metallwand versehen ist.

### Darstellung der Erfindung, Aufgabe, Lösung, Vorteile

Es ist die Aufgabe der Erfindung, einen verbesserten Wärmetauscher zu schaffen, der ein geringes Gewicht aufweist.

Dies wird erreicht mit einem Wärmetauscher mit den Merkmalen von Anspruch 1. Vorteilhafte Ausgestaltungen des Wärmetauschers sind in den abhängigen Ansprüchen ausgeführt.

Der Wärmetauscher weist in einem bevorzugten Ausführungsbeispiel ein Gehäuse und einen in dem Gehäuse angeordneten Tauscherbereich mit Rohren und mindestens einem Boden auf, wobei die Rohre an einem Rohrende mit dem mindestens einen Boden verbunden sind, wobei das Gehäuse aus einem Kunststoff gefertigt ist und eine Gehäuseinnenseite aufweist, wobei die Gehäuseinnenseite zumindest bereichsweise oder abschnittsweise mindestens mit einem metallischen Element zum Schutz des Gehäuses vor einer thermischen Belastung bedeckt ist. Die thermische Belastung kann hierbei durch einen Fügeprozess, insbesondere durch Laserschweißen, hervorgerufen sein. Dadurch kann das metallische Element, welches die Gehäuseinnenseite zumindest bereichsweise bedeckt, das Gehäuse vor Beschädigung durch die thermische Belastung schützen.

Bevorzugt ist das metallische Element ausgehend von einem Randbereich der Gehäuseinnenseite an dieser angeordnet und deckt die Gehäuseinnenseite zumindest bereichsweise ab.

Bevorzugt weist der Wärmetauscher zwei Böden auf, wobei das Rohrende ein erstes Rohrende ist und das Rohr ein zweites Rohrende aufweist, das mit einem zweiten Boden verbunden ist. Somit sind die Rohre des Tauscherbereichs mit dem ersten Boden und dem zweiten Boden verbunden, bilden ein Rohr/Boden-Paket und sind in montiertem Zustand in dem Gehäuse angeordnet.

Die Rohre sind bevorzugt in axialer Richtung im Tauscherbereich angeordnet. An dem ersten oder dem zweiten Boden kann ein Diffusor zum Zuführen eines Abgasstroms angeordnet sein. Durch die im Gehäuse angeordneten Rohre kann im Betrieb des Wärmetauschers ein erstes Fluid strömen, bevorzugt ein Kühlmittel.

Außerhalb der Rohre kann ein zweites Fluid, bevorzugt ein zu kühlender Abgasstrom durch das Gehäuse strömen.

Die Rohre und der Boden sind aus einem temperaturbeständigen, insbesondere hochtemperaturbeständigen Material, bevorzugt einem Metall gefertigt. Durch die Anordnung des metallischen Elementes in Bereichen der Gehäuseinnenseite ist es ermöglicht, dass zumindest die Verbindung zwischen einem der Böden und einem der Rohrenden hergestellt werden kann, nachdem zumindest teilweise in dem Boden eingesteckte Rohre im Gehäuse angeordnet sind.

Die Verbindung zwischen Rohren und Boden wird mittels einer Fügetechnik, insbesondere mittels Laserschweißens hergestellt. Bevorzugt wird jeweils ein Rohrende in den ersten Boden angeordnet, bevorzugt eingesteckt und damit ein Rohr/Boden-Paket hergestellt, das Rohr/Boden-Paket in das Gehäuse eingeschoben, die verbleibenden Rohrenden in den zweiten Boden eingesteckt und die Rohrenden mit den jeweiligen Böden verschweißt.

Bei dem erfindungsgemäßen Verfahren zur Herstellung eines Wärmetauschers mit einem Tauscherbereich mit Rohren, die von einem Fluid durchströmbar sind, mit einem Gehäuse, in dem der Tauscherbereich angeordnet ist, und Böden, wird zumindest ein Rohrende der Rohre in einem ersten Verfahrensschritt in zumindest einen der Böden eingesteckt und in einem zweiten Verfahrensschritt wird mit einer Verbindungstechnik eine nicht lösbare, insbesondere feste Rohr-Boden-Verbindung hergestellt.

Die nicht-lösbare Verbindung kann nicht einfach durch eine Umkehr des Verbindungs- oder Fügeprozesses getrennt werden. Die nicht-lösbare Verbindung kann eine feste Verbindung sein, die nur durch Zerstören trennbar ist. Bevorzugt ist die Verbindung eine stoffschlüssige Verbindung. Die Verbindungstechnik ist bevorzugt ein Fügeverfahren, bevorzugt ein Laserschweißverfahren oder Lötverfahren. Die Rohr-Boden-Verbindung kann an einem Ende des Rohr/Boden-Paketes hergestellt werden wenn dieses in dem Gehäuse angeordnet ist oder an beiden Seiten des Rohr/Boden-Paketes. Somit ist ein Wärmetauscher mit einem Kunststoffgehäuse einfach und kostengünstig herstellbar, insbesondere ein I-Flow-Wärmetauscher. Insbesondere kann die Rohr/Boden-Verbindung hergestellt werden, ohne, dass aufwendige Zwischenelemente wie im Stand der Technik verwendet werden müssen. Bevorzugt wird das metallische Element jeweils an den Stellen angeordnet, an denen beim Laserschweißen der Rohre in den Boden Streulicht auftreten könnte. Bevorzugt werden die metallischen Elemente an den offenen Gehäuseenden angeordnet, in die die Rohr/Boden-Einheit eingeschoben wird. Somit ist der Bereich des Gehäuses, der in unmittelbarer Nähe der Rohr/Boden-Verbindungsstelle angeordnet ist vor Laserstreulicht geschützt.

Bevorzugt ist vorgesehen, eine Einzahl oder eine Mehrzahl von metallischen Elementen an zumindest einer Gehäuseinnenseite anzuordnen, wobei das/die metallische/n Element/e in den Kunststoff des Gehäuses eingegossen ist/sind. Besonders bevorzugt weist der Wärmetauscher einen einen Boden aufnehmenden Bereich oder einen an einen Boden direkt angrenzenden Bereich des Gehäuses auf, wobei zumindest das zumindest eine metallische Element an einer der Gehäuseinnenseiten angeordnet ist. Insbesondere kann das zumindest eine metallische Element einen ringförmigen Querschnitt aufweisen und die Außenflächen des metallischen Elementes können der Gehäuseinnenseite nachgebildet sein. Hierbei ist auf Grund des ringförmigen Querschnitts insbesondere eine geschlossene Form des metallischen Elements gewährleistet. Der ringförmige Querschnitt kann hierbei kreisförmig sein. Das metallische Element kann ebenso gerade Abschnitte und abgerundete Ecken aufweisen und eine eher rechteckige Form mit abgerundeten Ecken aufweisen und mit dieser geometrischen Ausgestaltung eine geschlossene Abdeckung der Gehäuseinnenseite gewährleisten.

In einer Ausgestaltung kann das zumindest eine metallische Element einen zumindest teilweise umlaufenden abgewinkelten Randbereich aufweisen. Bevorzugt kann der zumindest teilweise umlaufende abgewinkelte Randbereich einen Anschlag gegenüber dem Gehäuse ausbilden.

Bevorzugt ist das zumindest eine metallische Element zweiteilig ausgebildet, wobei die Teilung durch Trennschnitte an zwei sich gegenüberliegenden Flächen des metallischen Elementes erzeugt ist. Bevorzugt hat das Inlay hierbei ein, beispielsweise eine obere und eine oder zwei seitliche Gehäuseinnenseiten zumindest bereichsweise umhüllendes Inlayelement und ein zweites, beispielsweise eine untere Gehäuseinnenseite zumindest bereichsweise umhüllendes zweites Inlayelement. Zwischen dem ersten Inlayelement und dem zweiten Inlayelement entsteht an den seitlichen Gehäuseinnenseiten eine Trennlinie. Die Trennlinie kann aber auch an der oberen und/oder der unteren Gehäuseinnenseite angeordnet sein. Hierdurch kann einfacher ein unsymmetrisches Gehäuse innenseitig von dem metallischen Element, insbesondere dem Inlay umhüllt werden.

Bevorzugt ist das mindestens eine metallische Element ein Inlay. Das Inlay ist zumindest bereichsweise aus Metall gefertigt. Das Inlay ist im Gehäuse aus Kunststoff mitgespritzt. Dies ist vorteilhaft, wenn das Gehäuse aus Kunststoff ein Spritzgussteil ist.

In einer Ausgestaltung des Wärmetauschers ist das Inlay einstückig ausgebildet. Das Inlay ist bevorzugt an einem oder an beiden Enden des Gehäuses an diesem ausgebildet.

Alternativ zur beanspruchten Erfindung kann das mindestens eine metallische Element als eine metallische Beschichtung des Gehäuses, insbesondere der Gehäuseinnenseite ausgeführt sein. Beschichtungen, insbesondere metallische Beschichtungen können bevorzugt dünn ausgeführt sein. Außerdem können sie einfach auf die Gehäuseinnenseite mittels an sich bekannter Beschichtungsverfahren aufgebracht werden. Die metallische Beschichtung ist besonders bei komplizierten Formen der Gehäuseinnenseite geeignet.

In einer bevorzugten Ausgestaltung des Wärmetauschers bedeckt das mindestens eine metallische Element die Gehäuseinnenseite komplett. Das metallische Element erstreckt sich hierbei innenseitig von einem ersten Gehäuseende zu einem zweiten Gehäuseende. Beispielsweise kann die Beschichtung durchgängig ausgeführt sein. Alternativ kann das metallische Element die Abmessungen der Gehäuseinnenseite in Längserstreckungsrichtung komplett abdecken. Hierbei kann das metallische Element aber die Gehäuseinnenseite an deren Umfang nur bereichsweise abdecken.

Das Gehäuse des Wärmetauschers kann ein 2K-Kunststoffbauteil sein.

Die Aufgabe wird auch durch ein Kraftfahrzeug mit mindestens einem erfindungsgemäßen Wärmetauscher nach einem der Ansprüche 1 bis 11 gelöst, bei dem der Tauscherbereich mit Rohren beidseitig mit jeweils einem Boden verschweißt wird, nachdem dieser bereits im Gehäuse aus Kunststoff angeordnet ist. Hierbei sind keine Zwischenelemente zur Ermöglichung der Schweißnaht notwendig. Durch die Einsparung von Zwischenelementen aufgrund des erfindungsgemäßen Verfahrens kann Gewicht eingespart werden. Außerdem kann ein gewichtsreduzierter I-Flow-Wärmetauscher mit zwei Böden (pro Seite des Gehäuses ein Boden) aus leichtem Kunststoff eingesetzt werden.

Erfindungsgemäß ist es vorteilhaft, wenn der Wärmetauscher ein Abgaswärmetauscher ist.

Weitere vorteilhafte Ausgestaltungen sind durch die nachfolgende Beschreibung der Figuren der Zeichnung und durch die Unteransprüche beschrieben.

### Kurze Beschreibung der Zeichnung

Nachstehend wird die Erfindung auf der Grundlage zumindest eines Ausführungsbeispiels anhand der Figuren der Zeichnung näher erläutert. Es zeigen:
- Fig. 1: ein Gehäuse eines I-Flow-Wärmetauschers;
- Fig. 2: das Gehäuse mit zugeordneten Inlays;
- Fig. 3: das Gehäuse mit montierten Rohr/Boden-Paket.

### Bevorzugte Ausführung der Erfindung

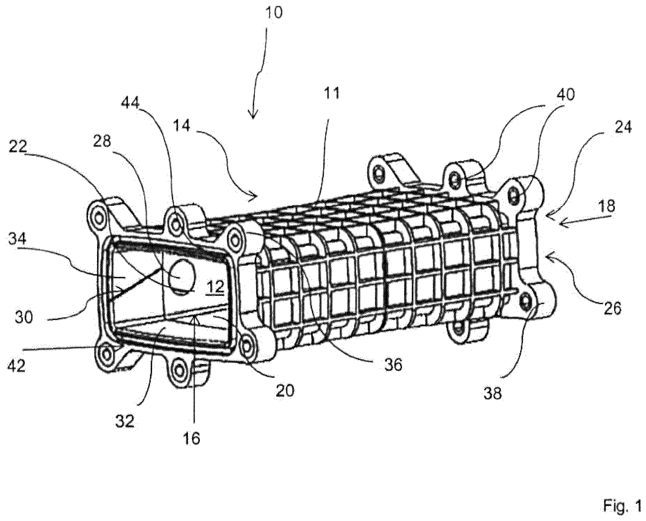

Die Figur 1 zeigt ein erstes Ausführungsbeispiel eines Gehäuses 10 eines Wärmetauschers (nicht dargestellt in Figur 1) in einer perspektivischen Seitenansicht mit Blickrichtung ins Gehäuseinnere 12. Das Gehäuse 10 ist aus einem Kunststoffmaterial gefertigt und bevorzugt im Spritzgussverfahren hergestellt. Das Gehäuse 10 ist als I-Flow-Gehäuse 10 aufgebaut und weist einen länglichen Gehäusekörper 14 auf, der von einem Gehäusemantel 11 aus Kunststoff gebildet wird und stirnseitig eine erste Öffnung 16 und eine zweite Öffnung 18 aufweist.

Das Gehäuseinnere 12 weist vier im Wesentlichen planar ausgeführte Gehäuseinnenseiten 20, 22, 24 und 26 auf. Hierbei liegen sich die Gehäuseinnenseiten 20 und 24 sowie die Gehäuseinnenseiten 22 und 26 gegenüber.

An der Gehäuseinnenseite 22 ist eine Ausnehmung 28 gezeigt, an die ein Anschluss (nicht gezeigt in Figur 1) zur Zuführung von einem Fluid anschließbar ist.

An den Gehäuseinnenseiten 20, 22, 24 und 26 ist ein Inlay 30 angeordnet, welches ein erstes Inlayelement 32 und ein zweites Inlayelement 34 aufweist. Das Inlay 30 ist zweiteilig ausgeführt. Das Inlay 30 kann hierbei zweiteilig (wie in der Figur 1 gezeigt) oder 3- teilig oder allgemein mehrteilig ausgeführt sein und die entsprechende Anzahl von Inlayelementen aufweisen. Das Inlay 30 bzw. die Inlayelemente 32, 34 sind durch ein metallisches Element 30 oder durch mehrere metallische Elemente 32, 34 gebildet. Die Bezeichnung Inlay 30 bzw. Inlayelement 32, 34 steht im nachfolgenden als Äquivalent zu der Bezeichnung metallisches Element 30, 32, 34.

Bevorzugt ist das Inlayelement 30, welches das metallische Element 30 bildet, als ringförmiger Körper gestaltet. Der Verlauf der Außenflächen des ringförmigen Körpers ist dabei dem Verlauf der Gehäuseinnenseiten 20, 22, 24, 26 nachempfunden. Der ringförmige Körper kann dadurch in vollflächigem Kontakt an die Gehäuseinnenseiten 20, 22, 24, 26 angelegt werden. Der ringförmige Körper wird dabei durch das Material, welches das Gehäuse 10 bildet, im Herstellungsprozess des Gehäuses 10 umspritzt. Hierzu kann das Inlay 30 bzw. die Inlayelemente 32, 34 vorteilhafterweise in die Gussform des Gehäuses 10 eingelegt werden und nachfolgend mit dem das Gehäuse 10 bildende Material umspritzt werden.

Das Inlay 30 bzw. die Inlayelemente 32, 34 weisen vorzugsweise einen zumindest teilweise umlaufenden Randbereich auf, welcher im Vergleich zu dem den ringförmigen Körper bildenden Bereich abgewinkelt ist. Der abgewinkelte Randbereich bildet einen Anschlag gegenüber dem Gehäuse 10 und insbesondere gegenüber den jeweiligen Flanschbereichen 36, 38 an den Öffnungen 16, 18 des Gehäuses 10. Durch den abgewinkelten Randbereich wird die Einschubtiefe des Inlays 30 bzw. der Inlayelemente 32, 34 begrenzt.

Das Inlay 30, 32, 34 kleidet die Gehäuseinnenseiten 20, 22, 24, 26 in dem Ausführungsbeispiel im Bereich der Öffnungen 16 und 18 aus. Die Abmessungen des Inlays 30, 32, 34 können aber auch in Längserstreckungsrichtung des Gehäusekörpers 11 dessen Abmessung entsprechen und sich von der Öffnung 16 zur Öffnung 18 erstrecken. Das Inlay 30, 32, 34 kann ein separates metallisches Element sein oder alternativ zur beanspruchten Erfindung als Beschichtung der Gehäuseinnenseiten 20, 22, 24 und 26 ausgeführt sein. Hierbei werden die Gehäuseinnenseiten 20, 22, 24 und 26 zumindest im Bereich der Öffnungen 16 und 18 von einem metallischen Material bedeckt. Bevorzugt erstreckt sich das metallische Element 30, 32, 34 einige Zentimeter von der jeweiligen Öffnung 16 und 18 ins Gehäuseinnere 12.

Das Gehäuse 10 weist beidseitig jeweils einen Anschlussflansch auf, dies sind Anschlussflansch 36 und 38. Die Anschlussflansche 36 und 38 weisen Ausnehmungen 40 auf. Ferner weist das Gehäuse 10 an seiner Stirnseite 42 eine Dichtungsnut 44 auf.

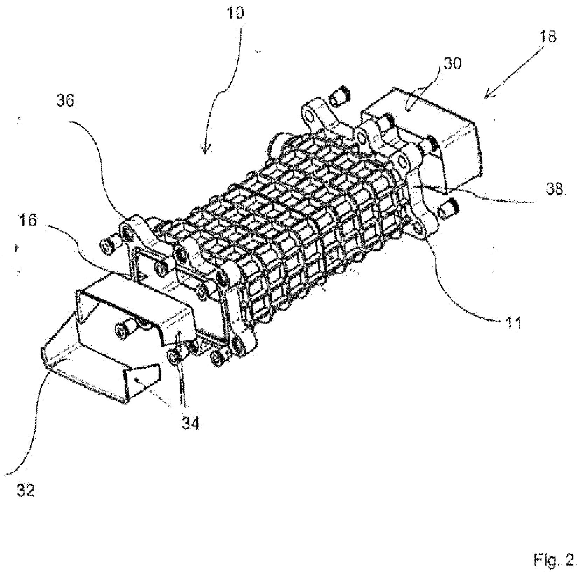

Figur 2 zeigt das Gehäuse 10 in einer Explosionsdarstellung. Das metallische Element 30, 32 und 34 ist hier beispielhaft als einstückiges Inlay 30 und als zwei Inlayelemente 32 und 34 ausgeführt.

Die Trennung des metallischen Elementes 30 in zwei oder mehr Elemente 32, 34 ist vorteilhafterweise durch Trennschnitte realisiert, welche an sich im Wesentlichen gegenüberliegenden Flächen des metallischen Elementes 30, 32, 34 verlaufen. Die Trennschnitte können dabei parallel zueinander verlaufen oder, wie in Figur 2 dargestellt, gegenläufig zueinander geneigt sein. Durch diese gegenläufige Ausrichtung der Trennschnitte kann ein Verrutschen der einzelnen Elemente 32, 34 gegeneinander vermieden werden.

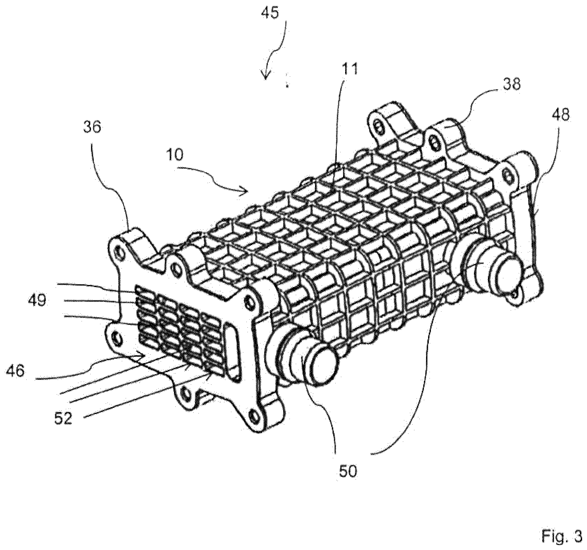

Figur 3 zeigt einen Wärmetauscher 45 mit dem Gehäuse 10 im montierten Zustand. An dem Gehäuse 10 sind ein erster Boden 46 und ein zweiter Boden 48 an dem jeweiligen Anschlussflansch 36 und 38 montiert. In dem ersten Boden 46 und dem zweiten Boden 48 sind Rohre 49 angeordnet, insbesondere eingesteckt und mit diesem stoffschlüssig verbunden, wie insbesondere verschweißt oder verlötet, bevorzugt mit einem Laserschweißverfahren verbunden, insbesondere nicht lösbar verbunden. An der Öffnung 28 ist ein Anschluss 50 montiert durch den ein Fluid, insbesondere gasförmiges Fluid in das Gehäuseinnere 12 gelangen kann und zwischen den Rohren 49, durch die ein Kühlfluid strömen kann, strömen kann.

Das Verfahren zur Herstellung des Wärmetauschers weist somit die Schritte auf:
- Herstellen eines Gehäusekörpers 11 aus einem Kunststoffmaterial, bevorzugt mittels eines Spritzgussverfahrens,
- wobei ein metallisches Element 30, 32, 34 zumindest im Bereich der beiden stirnseitigen Öffnungen 42 an den Gehäuseinnenseiten 20, 22, 24 und 26 in den Kunststoff des Gehäuses eingegossen wird,
- Anordnen des Rohr-Boden-Paketes, bei dem zumindest jeweils ein Rohrende der Rohre 49 jeweils in Öffnungen 52 des zumindest einen Bodens 46 oder 48 gesteckt sind,
- Optional: Anordnen des zweiten Bodens 46 oder 48, wenn das Rohr/Boden-Paket in dem Gehäusekörper 14 angeordnet ist,
- Verschweißen, insbesondere mittels Laserschweißens der jeweiligen Rohrenden der Rohre 49 mit dem jeweiligen Boden 46, 48.

Nach dem das Herzstück des Wärmetauschers 45 bestehend aus dem Gehäuse 10 und dem Rohr/Boden-Paket montiert ist, kann der Wärmetauscher 45 in ein Kraftfahrzeug (nicht dargestellt) eingebaut werden und an die Anschlüsse 50 können Verbindungselemente für ein gasförmiges Fluid angeschlossen werden und die Rohre 49 können an den Kühlfluidkreislauf angeschlossen werden.

## Patentansprüche

1. Wärmetauscher (45) mit einem Gehäuse (10) und einem in dem Gehäuse (10) angeordneten Tauscherbereich mit Rohren (49) und mindestens einem Boden (46, 48), wobei die Rohre (49) mit dem mindestens einen Boden (46, 48) verbunden sind, wobei das Gehäuse (10) aus einem Kunststoff gefertigt ist und eine Gehäuseinnenseite (20, 22, 24, 26) aufweist, wobei die Gehäuseinnenseite (20, 22, 24, 26) zumindest bereichsweise oder abschnittsweise mit mindestens einem metallischen Element (30, 32, 34) zum Schutz des Gehäuses (10) vor einer thermischen Belastung bedeckt ist und wobei eine Einzahl oder eine Mehrzahl von metallischen Elementen (30, 32, 34) an zumindest einer Gehäuseinnenseite (20, 22, 24,26) vorgesehen ist, **dadurch gekennzeichnet, dass** das/die metallische/n Element/e (30, 32, 34) in den Kunststoff des Gehäuses (10) eingegossen ist/sind.

2. Wärmetauscher (45) nach Anspruch 1, **dadurch gekennzeichnet, dass** ein einen Boden (46, 48) aufnehmender Bereich oder ein an einen Boden (46, 48) direkt angrenzender Bereich des Gehäuses (10) zumindest ein metallisches Element (30, 32, 34) an einer der Gehäuseinnenseiten (20, 22, 24, 26) aufweist.

3. Wärmetauscher (45) nach Anspruch 1 oder 2, **dadurch gekennzeichnet, dass** das zumindest eine metallische Element (30, 32, 34) einen ringförmigen Querschnitt aufweist und die Außenflächen des metallischen Elementes (30, 32, 34) der Gehäuseinnenseite (20,22, 24, 26) nachgebildet sind.

4. Wärmetauscher (45) nach einem der vorhergehenden Ansprüche, **dadurch gekennzeichnet, dass** das zumindest eine metallische Element (30, 32, 34) einen zumindest teilweise umlaufenden abgewinkelten Randbereich aufweist.

5. Wärmetauscher (45) nach Anspruch 4, **dadurch gekennzeichnet, dass** der zumindest teilweise umlaufende abgewinkelte Randbereich einen Anschlag gegenüber dem Gehäuse (10) ausbildet.

6. Wärmetauscher (45) nach einem der vorhergehenden Ansprüche, **dadurch gekennzeichnet, dass** das zumindest eine metallische Element (32, 34) zweiteilig ausgebildet ist, wobei die Teilung durch Trennschnitte an zwei sich gegenüberliegenden Flächen des metallischen Elementes (32, 34) erzeugt ist.

7. Wärmetauscher (45) nach einem der vorhergehenden Ansprüche, **dadurch gekennzeichnet, dass** das mindestens eine metallische Element (30, 32, 34) ein Inlay (30, 32, 34) ist.

8. Wärmetauscher (45) nach Anspruch 7, **dadurch gekennzeichnet, dass** das Inlay (30, 32, 34) einstückig oder mehrstückig ausgebildet ist.

9. Wärmetauscher (45) nach einem der vorhergehenden Ansprüche, **dadurch gekennzeichnet, dass** das mindestens eine metallische Element (30, 32, 34) eine metallische Beschichtung der Gehäuseinnenseite (20, 22, 24, 26) ist.

10. Wärmetauscher (45) nach einem der vorhergehenden Ansprüche, **dadurch gekennzeichnet, dass** das mindestens eine metallische Element (30, 32, 34) die Gehäuseinnenseite (20, 22, 24, 26) komplett bedeckt.

11. Wärmetauscher (45) nach einem der vorhergehenden Ansprüche, **dadurch gekennzeichnet, dass** das Gehäuse (10) ein 2K-Kunststoffbauteil ist.

## Claims

1. A heat exchanger (45) having a housing (10) and an exchanger region disposed in the housing (10) with tubes (49) and at least one base (46, 48), wherein the tubes (49) are connected to the at least one base (46, 48), wherein the housing (10) is manufactured from a plastic and has a housing inner surface (20, 22, 24, 26), wherein the housing inner surface (20, 22, 24, 26) is covered at least in regions or in sections with at least one metallic element (30, 32, 34) for protection of the housing (10) from a thermal load, and wherein a singular or a plurality of metallic elements (30, 32, 34) is provided on at least one housing inner surface (20, 22, 24, 26), **characterised in that** the metallic element(s) (30, 32, 34) is/are moulded into the plastic of the housing (10).

2. The heat exchanger (45) according to claim 1, **characterised in that** an area receiving a base (46, 48), or an area of the housing (10) directly adjacent to a base (46, 48), has at least one metallic element (30, 32, 34) on one of the housing inner surfaces (20, 22, 24, 26).

3. The heat exchanger (45) according to claim 1 or 2, **characterised in that** the at least one metallic element (30, 32, 34) has an annular cross section and the outer surfaces of the metallic element (30, 32, 34) simulate the housing inner surface (20, 22, 24, 26).

4. The heat exchanger (45) according to any one of the preceding claims, **characterised in that** the at least one metallic element (30, 32, 34) has an at least partially encircling angled edge zone.

5. The heat exchanger (45) according to claim 4, **characterised in that** the at least partially encircling angled edge region forms a stop against the housing (10).

6. The heat exchanger (45) according to any one of the preceding claims, **characterised in that** the at least one metallic element (32, 34) is formed in two parts, wherein the division is produced by separating cuts on two opposite surfaces of the metallic element (32, 34).

7. The heat exchanger (45) according to any one of the preceding claims, **characterised in that** the at least one metallic element (30, 32, 34) is an inlay (30, 32, 34).

8. The heat exchanger (45) according to claim 7, **characterised in that** the inlay (30, 32, 34) is formed in one piece or several pieces.

9. The heat exchanger (45) according to any one of the preceding claims, **characterised in that** the at least one metallic element (30, 32, 34) is a metallic coating on the housing inner surface (20, 22, 24, 26).

10. The heat exchanger (45) according to any one of the preceding claims, **characterised in that** the at least one metallic element (30, 32, 34) completely covers the housing inner surface (20, 22, 24, 26).

11. The heat exchanger (45) according to any one of the preceding claims, **characterised in that** the housing (10) is a 2-component plastic part.

## Revendications

1. Echangeur de chaleur (45) comprenant un carter (10) et une zone d'échangeur qui comporte des tubes (49) et est disposée dans le carter (10), et comprenant au moins un fond (46, 48), où les tubes (49) sont reliés au fond (46, 48) au moins au nombre de un, où le carter (10) est fabriqué à partir d'une matière plastique et présente un côté intérieur de carter (20, 22, 24, 26), où le côté intérieur (20, 22, 24, 26) du carter est recouvert, au moins par zones ou partiellement, au moins d'un élément métallique (30, 32, 34) servant à la protection du carter (10) contre une charge thermique, et où il est prévu, sur au moins un côté intérieur (20, 22, 24, 26) du carter, un seul ou plusieurs éléments métalliques (30, 32, 34), **caractérisé en ce que** l'élément métallique ou les éléments métalliques (30, 32, 34) est ou sont moulé (s) dans la matière plastique du carter (10).

2. Echangeur de chaleur (45) selon la revendication 1, **caractérisé en ce qu'**une zone logeant un fond (46, 48) ou une zone du carter (10), qui est directement contiguë à un fond (46, 48), présente au moins un élément métallique (30, 32, 34) sur l'un des côtés intérieurs (20, 22, 24, 26) du carter.

3. Echangeur de chaleur (45) selon la revendication 1 ou 2, **caractérisé en ce que** l'élément métallique (30, 32, 34) au moins au nombre de un présente une section de forme annulaire, et les surfaces extérieures de l'élément métallique (30, 32, 34) sont formées en reproduisant la configuration du côté intérieur (20, 22, 24, 26) du carter.

4. Echangeur de chaleur (45) selon l'une quelconque des revendications précédentes, **caractérisé en ce que** l'élément métallique (30, 32, 34) au moins au nombre de un présente une zone de bordure coudée au moins partiellement circulaire.

5. Echangeur de chaleur (45) selon la revendication 4, **caractérisé en ce que** la zone de bordure coudée au moins partiellement circulaire forme une butée par rapport au carter (10).

6. Echangeur de chaleur (45) selon l'une quelconque des revendications précédentes, **caractérisé en ce que** l'élément métallique (32, 34) au moins au nombre de un est conçu en deux parties, où la division est produite par deux coupes de séparation effectuées au niveau de deux surfaces de l'élément métallique (32, 34) qui se font face.

7. Echangeur de chaleur (45) selon l'une quelconque des revendications précédentes, **caractérisé en ce que** l'élément métallique (30, 32, 34) au moins au nombre de un est une incrustation ou *inlay* (30, 32, 34).

8. Echangeur de chaleur (45) selon la revendication 7, **caractérisé en ce que** l'incrustation ou *inlay* (30, 32, 34) est conçue en étant composée d'une seule pièce ou de plusieurs pièces.

9. Echangeur de chaleur (45) selon l'une quelconque des revendications précédentes, **caractérisé en ce que** l'élément métallique (30, 32, 34) au moins au nombre de un est un revêtement métallique du côté intérieur (20, 22, 24, 26) du carter.

10. Echangeur de chaleur (45) selon l'une quelconque des revendications précédentes, **caractérisé en ce que** l'élément métallique (30, 32, 34) au moins au nombre de un recouvre complètement le côté intérieur (20, 22, 24, 26) du carter.

11. Echangeur de chaleur (45) selon l'une quelconque des revendications précédentes, **caractérisé en ce que** le carter (10) est une pièce en matière plastique 2K, c'est-à-dire à deux composants.
